# EUROPEAN PATENT APPLICATION

(11) **EP 4 764 937 A1**
(43) Date of publication of application: **24.06.2026**
(21) Application number: 25218399.1
(22) Date of filing: 25.11.2025
(51) Int. Cl.: G06F 30/23, G06F 30/27, G06N 3/045

(54) **CRACK RISK PREDICTION FOR A COMBINATION OF PATTERNING DESIGN TO BE USED IN PATTERNING OF FIBER BASED PACKAGING MATERIAL AND MATERIAL MODEL PARAMETERS OF THE FIBER BASED PACKAGING MATERIAL**

(30) Priority: 19.12.2024 EP 24221520; 26.09.2025 EP 25204998
(71) Applicant: Tetra Laval Holdings & Finance S.A., 1009 Pully (CH)
(72) Inventor: Bergvall, Erik, 221 86 Lund (SE); Johannesson, Peter, 221 86 Lund (SE)
(74) Representative: Tetra Pak Patent Attorneys

(57) **Abstract**

The present invention relates to training a machine learning model to predict a relative crack index, RCI, map for a candidate combination of a paperboard patterning design and a paperboard material having a set of paperboard material model parameters, the candidate combination to be used in patterning of paperboard packaging material. The training comprises: generating a training dataset for the machine learning model by, for each training combination of one or more training paperboard patterning designs and one or more paperboard materials having a respective set of paperboard material model parameters, performing a finite element method simulation resulting in a respective training RCI map; and training the machine learning model by adjusting weights of the machine learning model using the training combinations of the training dataset as input and the training RCI maps of the training dataset as ground truth. A training apparatus for training the machine learning model is also presented as well as use of the machine learning model to predict a RCI map for a candidate paperboard patterning design.

## Description

### Technical field

The present invention relates to determining a relative crack index, RCI, map for a candidate combination of a paperboard patterning design and a paperboard material having a set of material model parameters.

### Background of the invention

Within the food industry today, the food package technology plays an important part. The food package has several important functions. Apart from branding of the product and presenting the customers with information, the food package also has an important role of ensuring food safety. The packaging materials used in the food package can be designed to provide strength and stability, so that the packages are not damaged during transportation. Furthermore, the packaging materials can form a protective environment for the food product so that it is protected from for example bacteria, germs, oxygen and sun light, thus prolonging shelf life. The packaging material may be based on paperboard material.

Forming a food package from paperboard involves a precise combination of scoring, i.e. creating creases, folding, and sometimes adhesive application. This process allows a flat sheet of paperboard material to be transformed into a three-dimensional package. The use of paperboard material, typically made from layers of paper pulp or any other suitable fiber material, paperboard is chosen for its strength, rigidity, and ability to retain creases. In order to prepare the paperboard material to be transformed into a three-dimensional package, a flat sheet of paperboard is printed with branding and product information. It may also be laminated with moisture-resistant, and/or grease-resistant layers. Moreover, the paperboard material is provided with creases or scores acting as hinges to facilitate controlled and precise folding into the three-dimensional package. Various methods for applying the creases or scores exists. For example, a rotary die cutter may be used to press a metal die onto the paperboard to create creases or scores along specific lines. Alternatively, or in combination, a flat die may be used to apply pressure on specific areas in order to create creases or scores, this is especially useful for creating more intricate designs. A flat die may also be used for creating embosses in the paperboard material. Alternatively, or in combination, scoring/creasing rollers may be used to create a pattern of creases or scores in the paperboard. The scoring/creasing rollers may comprise a female and male roll. Applying creases/scores/embosses to a paperboard material in connection with food package production is typically referred to as applying a pattern to the paperboard material.

Upon designing tools to be used to apply creases/scores/embosses, i.e. applying a pattern, to the paperboard considerations on the layout of the pattern, including depths/widths of the creases/scores/embosses and/or distance between features in the design must be made so that the patterning do not risk tearing and/or cracking the paperboard material. This is typically made by determining a relative crack index, RCI, map for a candidate paperboard patterning design. The determination of the RCI map may also be made dependent on the mechanical properties of the specific paperboard material, which are defined by a set of material model parameters of a candidate paperboard material. Such determining is typically made using finite element method simulations. In addition to a candidate paperboard patterning design, these simulations have the paperboard material model parameters (such as elastic moduli, yield strength, and anisotropic criteria) of a candidate paperboard material as inputs to accurately predict the material's behavior under localized strain. However, such simulations are computer power demanding as well as time consuming to perform. Accordingly, there is a need for an improved way of determining a RCI map for a candidate paperboard patterning design that efficiently integrates the paperboard material model parameters of a candidate paperboard material.

### Summary of the invention

The herein disclosed technology seeks to at least partly mitigate, alleviate or eliminate one or more of the above-mentioned deficiencies and disadvantages in the prior art. In particular, it is an object to provide an improved way of determining a relative crack index, RCI, map for a candidate combination of a paperboard patterning design and a paperboard material having a set of paperboard material model parameters.

The inventors of the present inventive concept have realized a new and improved way of determining a RCI map for a candidate combination of a paperboard patterning design and a paperboard material having a set of paperboard material model parameters. Especially, an improved way of determining a RCI map for a candidate combination of a paperboard patterning design and a paperboard material having a set of paperboard material model parameters which is less time consuming and less processing demanding as compared with prior art. According to the present invention a machine learning model is trained to predict the RCI map for a candidate combination of a paperboard patterning and a paperboard material having a set of paperboard material model parameters.

Various aspects and embodiments of the disclosed invention are defined below and in the accompanying independent and dependent claims.

According to a first aspect, there is provided a training method for training a machine learning model to predict a relative crack index, RCI, map for a candidate combination of a paperboard patterning design and a paperboard material having a set of paperboard material model parameters, the candidate combination to be used in patterning of paperboard packaging material. The training method comprises generating a training dataset for the machine learning model by, for each training combination of one or more training paperboard patterning designs and one or more paperboard materials having a respective set of paperboard material model parameters, performing a finite element method simulation resulting in a respective training RCI map. The training method further comprises training the machine learning model to predict the RCI map for the candidate combination inputted to the machine learning model. The training comprises adjusting weights of the machine learning model using the training combination of paperboard patterning designs and paperboard materials of the training dataset as input and the training RCI maps of the training dataset as ground truth. The training method is computer implemented since both the generation of the training dataset and the training the machine learning model is to be performed by processing in a computer.

The RCI map is a spatial map quantifying localized crack initiation risk in paperboard packaging material as caused by the patterning process. In particular, the RCI map is represented as a two-dimensional map quantifying local crack initiation probabilities within the paperboard packaging material as a result of the patterning design. Relative Crack Index, RCI, is defined as the risk of generating a local fracture in the paperboard and is calculated via an empirically determined non-linear function of the stress tensor.

Simulating relative crack index, RCI, responses using finite element method is a computationally expensive process. Many times, optimization over several different control factors mean weeks of simulation, and even then, only a few settings have been simulated. Hence, in order to evaluate candidate combinations of paperboard patterning designs and paperboard materials for a new tool for pattering packaging material and/or a new paperboard material is very time consuming and demands much computer processing power. Typically, finite element method simulations are to be performed on cluster computers. However, it may be troublesome to get access to time slots on such cluster computers to perform the finite element method simulations. Further, licenses for the software to be used for finite element method simulation may be expensive. Hence, there is a need to have shorter and less expensive development loops in developing new tools for paperboard patterning and/or a new paperboard material. The present invention allows this since once the machine learning model is trained running such model is less computationally heavy than finite element method simulations. The RCI is a critical output of the machine learning model, which is trained on a dataset comprising various combinations paperboard patterning designs and paperboard materials and their corresponding RCI values derived from finite element method simulations. The model is configured to utilize key input features-such as crease depths, material properties, and manufacturing conditions-that influence the RCI, thereby enabling accurate predictions of crack risk for candidate combinations of paperboard patterning designs and paperboard materials. This integration ensures that the model effectively guides the design process of new paperboard patterning designs and/or new paperboard materials to minimize the likelihood of cracking in paperboard packaging materials.

The training dataset preferably comprises a total of approximately 100 to 1000 unique combinations of designs and corresponding FEM simulations to adequately map the relationship between input features and the resulting RCI map.

The one or more properties of the paperboard packaging material may be selected from the group of properties consisting of: density, elastic and plastic stresses and strains, yield stress/strength, stress/strain at break, thickness, bending stiffness, tensile energy absorption, and compression strength.

Each paperboard patterning design, i.e. both the training paperboard patterning designs and the candidate paperboard patterning design, may comprise a surface topography of a tool to be used for applying the patterning to a paperboard. The surface topography is typically derived from a 3D model of the respective paperboard patterning design.

Each paperboard patterning design, i.e. both the training paperboard patterning designs and the candidate paperboard patterning design, may be represented as a 2D matrix of values. Further, the respective RCI map may be represented as a 2D matrix of values. Hence, both the input data and the output data of the machine learning model may be 2D matrix of values. Such 2D matrix of values may be seen as images. There are numerous machine learning models available suitable to handle data in the form of images. The machine learning model may be of Unet Architecture CNN type. The machine learning model may be EfficientNet, e.g. any one of EfficientNet b3-b7 models. Such machine learning models are well suited for handling data in the form of 2D matrices of values, i.e. data that may be represented as image data.

Each paperboard patterning design, i.e. both the training paperboard patterning designs and the candidate paperboard patterning design, may comprises a surface topography of a male roll and a surface topography of female roll, respectively. The male and female rolls may form a roller nip. Hence, the input data may be seen as an image with two channels, one for male patterning and one for female patterning. The surface topography data of the rolls may be flattened in the process of generating the respective paperboard patterning design. Each paperboard patterning design may further comprise a roller distance between the male and female rolls of the roller nip.

The machine learning model may further be configured to have one or more of a web tension of a web of the paperboard packaging material and a speed of the web of the paperboard packaging material as input. If so, generating the training dataset for the machine learning model further comprises considering the web tension and/or the speed of the web of the f paperboard packaging material in performing the finite element method simulation. Further, training the machine learning model further comprises using the web tension and/or the speed of the web of the paperboard packaging material as input in the training of the machine learning model.

According to a second aspect, there is provided a computer-implemented method for predicting relative crack index, RCI, for a candidate combination of a paperboard patterning design and a paperboard material having a set of paperboard material model parameters, the candidate combination to be used in paperboard packaging material patterning. The method comprises: providing a trained machine learning model being trained in accordance with the first aspect; inputting data of the candidate combination to the trained machine learning model; and receiving a predicted RCI map as output from the trained machine learning model.

Upon the machine learning model has been trained to have the web tension and/or the speed of the web of the paperboard packaging material as input, the input data to the trained machine learning model further comprises the web tension and/or the speed of the web of the paperboard packaging material.

The above mentioned features of the training method according to the first aspect, when applicable, apply to this second aspect as well. In order to avoid undue repetition, reference is made to the above.

According to a third aspect, there is provided a non-transitory computer-readable storage medium having stored thereon a machine learning model that has been trained in accordance with the first aspect.

The above mentioned features of the training method according to the first aspect, when applicable, apply to this third aspect as well. In order to avoid undue repetition, reference is made to the above.

According to a fourth aspect, there is provided a training apparatus for training a machine learning model to predict a relative crack index, RCI, map for a candidate combination of a paperboard patterning design and a paperboard material having a set of paperboard material model parameters, the candidate combination to be used in patterning of paperboard packaging material. The training apparatus comprising circuitry. The circuitry is configured to execute a training dataset generating function configured to: from 3D models of paperboard patterning designs, generate a respective training paperboard patterning design, and for each training combination of a training paperboard patterning design and a training paperboard material having a respective set of paperboard material model parameters, generate a respective training RCI map, wherein the respective training RCI map is generated by performing a respective finite element method simulation having the 3D model of the respective training paperboard patterning design and the set of paperboard material model parameters of the respective training paperboard material as input. The circuitry is configured to execute a training function configured to train the machine learning model to predict the RCI map for the candidate combination of the paperboard patterning design and the paperboard material by adjusting weights of the machine learning model using the training paperboard patterning designs and paperboard materials as input and the corresponding training RCI maps as ground truth. The model is typically trained for a sufficient number of epochs, such as 300-500 epochs, using a suitable optimizer and a loss function that minimizes the difference between the predicted and ground truth RCI maps.

The training dataset generating function and the training function are typically comprised as program code instructions on a memory of the training apparatus. The program code instructions being executable by the circuitry of the training apparatus.

The training paperboard patterning design may be represented as a 2D matrix of values representing height/depth of a surface topography of the 3D model of the paperboard patterning design. The training RCI maps may be represented as 2D matrices of values.

The set of paperboard material model parameters may comprise one or more of density, elastic and plastic stresses and strains, yield stress/strength, stress/strain at break, thickness, bending stiffness, tensile energy absorption, and compression strength.

The above mentioned features of the training method according to the first aspect, when applicable, apply to this fourth aspect as well. In order to avoid undue repetition, reference is made to the above.

A further scope of applicability of the present disclosure will become apparent from the detailed description given below. However, it should be understood that the detailed description and specific examples, while indicating preferred variants of the present inventive concept, are given by way of illustration only, since various changes and modifications within the scope of the inventive concept will become apparent to those skilled in the art from this detailed description.

### Brief description of the drawings

The above and other aspects of the present inventive concept will now be described in more detail, with reference to appended drawings showing variants of the present inventive concept. The figures should not be considered limiting the invention to the specific variant; instead, they are used for explaining and understanding the inventive concept.

As illustrated in the figures, the sizes of layers and regions are exaggerated for illustrative purposes and, thus, are provided to illustrate the general structures of variants of the present inventive concept. Like reference numerals refer to like elements throughout.
Figure 1 illustrates, by way of example, a tool for applying a patterning to a paperboard.
Figure 2a illustrates, by way of example, a portion of a 3D model of a paperboard patterning design of a tool for applying a patterning to a paperboard.
Figure 2b illustrates, by way of example, a portion of a RCI map determined using FEM simulations based on a 3D model of the portion of the paperboard patterning design of figure 2a, the RCI map is represented as a 2D matrix of values.
Figure 2c illustrates, by way of example, a surface topography of the portion of the paperboard patterning design of figure 2a, the surface topography is represented as a 2D matrix of values.
Figure 3 is a flow chart illustrating the generation of training data for training a machine learning model to predict a RCI map for a candidate paperboard patterning design.
Figure 4 is illustrating an apparatus for training a machine learning model to predict a RCI map for a candidate paperboard patterning design.
Figure 5 is a flow chart illustrating the use of a trained machine learning model to predict a RCI map for a candidate paperboard patterning design.
Figure 6 is illustrating a dual machine learning model approach in which a first/outer sub machine learning model having a full geometry of the paperboard patterning designs with a relatively lower resolution as input data and a second/inner sub machine learning model having a portion of the geometry of the paperboard patterning designs with a relatively higher resolution as input data is utilized in order to increase the resolution of the RCI prediction.

### Detailed description

The present inventive concept will now be described more fully hereinafter with reference to the accompanying drawings, in which currently preferred variants of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

It will also be appreciated that when the present disclosure is described in terms of a method, it may also be embodied in an apparatus or device comprising one or more processors, one or more memories coupled to the one or more processors, where computer code is loaded to implement the method. For example, the one or more memories may store one or more computer programs that perform the steps, services and functions disclosed herein when executed by the one or more processors.

It is also to be understood that the terminology used herein is for the purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. The term "obtaining" is herein to be interpreted broadly and encompasses receiving, retrieving, collecting, acquiring, and so forth.

The present invention is directed towards determining risk of cracks in paperboard via a relative crack index, RCI, map for a candidate combination of a paperboard patterning design and a paperboard material having a set of paperboard material model parameters. Especially, for a candidate combination to be used in patterning of fiber based packaging material, i.e. paperboard material. The use of paperboard material, typically made from layers of paper pulp or any other suitable fiber material, paperboard is chosen for its strength, rigidity, and ability to retain creases. It may also be laminated with moisture-resistant, gas permeability resistant, and/or grease-resistant layers. Moreover, the paperboard material is provided with creases or scores acting as hinges to facilitate controlled and precise folding into the three-dimensional package. Various methods for applying the creases or scores exists. In the process of preparing the paperboard material to be transformed into a three-dimensional package also embosses may be applied to the paperboard material. The paperboard patterning design to be used in patterning of the paperboard material may hence be a design set to apply creases, scores and/or embosses to the paperboard material having a set of paperboard material model parameters. The set of paperboard material model parameters may comprise one or more of density, elastic and plastic stresses and strains, yield stress/strength, stress/strain at break, thickness, bending stiffness, tensile energy absorption, and compression strength.

Density of the paperboard material is typically ranging from 500 to 1200 kg/m³.

Grammage of the paperboard material is typically ranging from 70 g/m² to 400 g/m².

Elastic and plastic stresses and strains of the paperboard material is typically ranging from 1.5 % to 7 % strain.

Yield stress/strength of the paperboard material is typically ranging from 4 kN/m to 35 kN/m (tensile strength).

Stress/strain at break of the paperboard material is typically ranging from 4 kN/m to 35 kN/m and 1.5% to 7% strain.

Thickness of the paperboard material is typically ranging 90 µm to 600 µm.

Bending stiffness of the paperboard material is typically ranging from 0 mN to 1300 mN.

Tensile stiffness of the paperboard material is typically ranging from 300 kN/m to 3500 kN/m.

Tensile energy absorption of the paperboard material is typically ranging from 100 J/m² to 700 J/m².

Compression strength of the paperboard material is typically ranging from 1 kN/m to 10 kN/m.

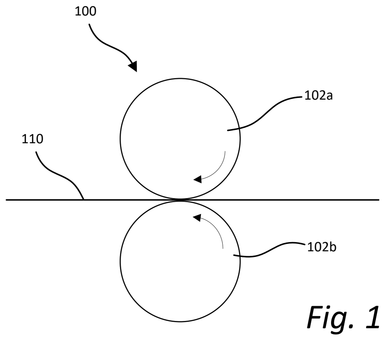

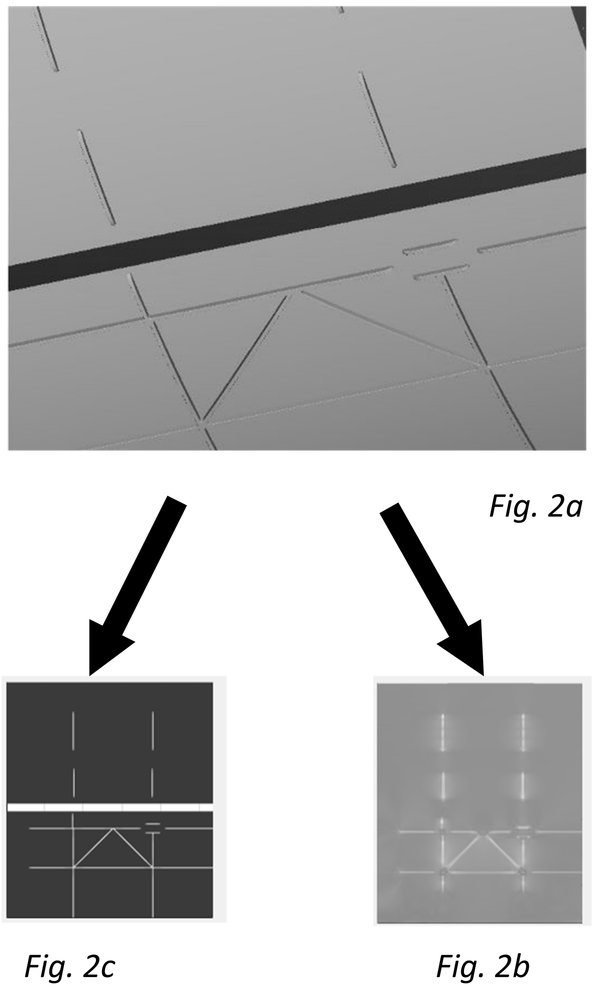

Fig. 1 illustrates, by way of example, a tool 100 for applying a patterning to a paperboard 110. The tool 100 comprises a male roll 102a and a female roll 102b forming a roller nip. The male roll 102a comprises a male pattern on its surface. The female roll 102b comprises a female pattern on its surface. A portion of 3D model of a female pattern is illustrated in Fig. 2a. The male and female patterns are typically complementary to each other. The patterning is applied to the paperboard 110 at the roller nip. The application of the pattern may be regarded as imprinting of the pattern to the paperboard 110. The paperboard 110 is feed through the roller nip upon the male and female rolls 102a, 102b are turned. As readily understood alternative tools for applying a patterning to a paperboard 110 also exists. For example, a flat die may be used to apply pressure on specific areas in order to create creases, scores and/or embosses.

As discussed above in the background section, upon designing a tool 100 to be used to apply creases/scores/embosses, i.e. applying a pattern, to the paperboard 110 considerations on the layout of the pattern, including depths/widths of the creases/scores/embosses and/or distance between features in the design, must be made so that the patterning do not risk tearing and/or cracking the paperboard material. In addition, also considerations on the paperboard material model parameters of the paperboard material itself are to be made. This during designing a tool 100 and/or designing a new paperboard material. This is typically made by determining a relative crack index, RCI, map for a paperboard patterning design for a new combination of a tool 100 for applying a patterning to a paperboard 110 and a paperboard material having paperboard material model parameters.

A commonly used method for determining a RCI map for a paperboard patterning design is to perform finite element method, FEM, simulations based on a 3D computer model of the paperboard patterning design and the paperboard material model parameters of the paperboard material. The 3D computer model of the paperboard patterning design may be a computer aided design, CAD, model. An example of a RCI map of the paperboard patterning design of Fig. 2a determined using FEM simulations is illustrated in Fig. 2b. Performing FEM simulations are computer power demanding as well as time consuming to perform and requires simulation expertise. The 3D computer model of the paperboard patterning design may in some embodiments also be a 3D+T computer model which refers to a computational representation that incorporates three spatial dimensions (3D) and time (T) as an additional dimension. This type of model is typically used to simulate systems or processes that evolve over time within a three-dimensional space.

The inventors has realized that by developing and training a machine learning model to predict a RCI map for a candidate combination of a paperboard patterning design and a paperboard material having a set of paperboard material model parameters , time and/or computer power may be saved in determining a RCI map for a new/candidate combination of paperboard patterning design and paperboard material.

Both the paperboard patterning design and the RCI map may be represented as 2D matrices of values. For the paperboard patterning design the surface topography may be represented in a 2D matrix of values. A 2D matrix of values for a paperboard patterning design may be derived from a 3D computer model of the paperboard patterning design. The height/depth of the surface topography may be represented as the values in the 2D matrix. For example, the surface topography may be represented as an image with height/depth as grayscale or any other suitable scale. An example of such image representing the surface topography of Fig. 2a is illustrated in Fig. 2c. Further, for the RCI map the relative crack index values of the RCI map may be represented in a 2D matrix of values, i.e. as an image. An example of such image representing an RCI map is illustrated in Fig. 2b.

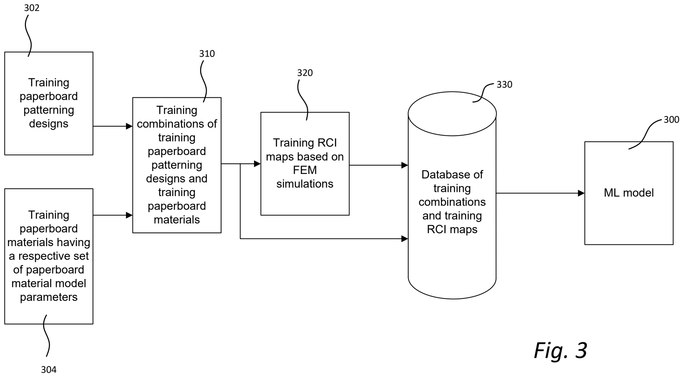

As illustrated in connection with Fig. 3, in order to train a machine learning model 300 to predict a RCI map for a candidate combination of a paperboard patterning design and a paperboard material, training data in the form of training combinations 310 of training paperboard patterning designs 302 and training paperboard materials 304 having a respective set of paperboard material model parameters, and corresponding training RCI maps 320 may be generated. The training combinations paperboard310 and corresponding training RCI maps 320 may be saved in a database 330. Both the training combinations 310 and corresponding training RCI maps 320 may be represented as 2D matrix of values, i.e. images. The training paperboard patterning designs 302 may be derived from a 3D computer model of a respective paperboard patterning design. Each training paperboard material 304 is represented by a respective set of paperboard material model parameters. The set of paperboard material model parameters may comprise one or more of density, elastic and plastic stresses and strains, yield stress/strength, stress/strain at break, thickness, bending stiffness, tensile energy absorption, and compression strength. A training RCI maps 320 may be generated for each training combination by performing a finite element method simulation resulting in a respective training RCI map 320. Referring to the tool 100 of Fig. 1, each training paperboard patterning design 302 may comprises a surface topography of the male roll 102a and a surface topography of the female roll 102b, respectively. Hence, the input data may be seen as an image with two channels, one for male patterning and one for female patterning. The surface topography data of the rolls 102a, 102b may be flattened in the process of generating the respective paperboard patterning design. Further, each paperboard patterning design 302 may further comprise a roller distance between the male and female rolls 102a,102b of the roller nip.

Training of the machine learning model 300 is made by adjusting weights of the machine learning model 300 using the training combinations 310 of the training dataset as input and the training RCI maps 320 of the training dataset as ground truth. The machine learning model 300 may be of Unet Architecture convolutional neural network, CNN, type. The machine learning model 300 may be EfficientNet, e.g. any one of EfficientNet b3-b7 models. Such machine learning models are well suited for handling data in the form of 2D matrices of values, i.e. data that may be represented as image data.

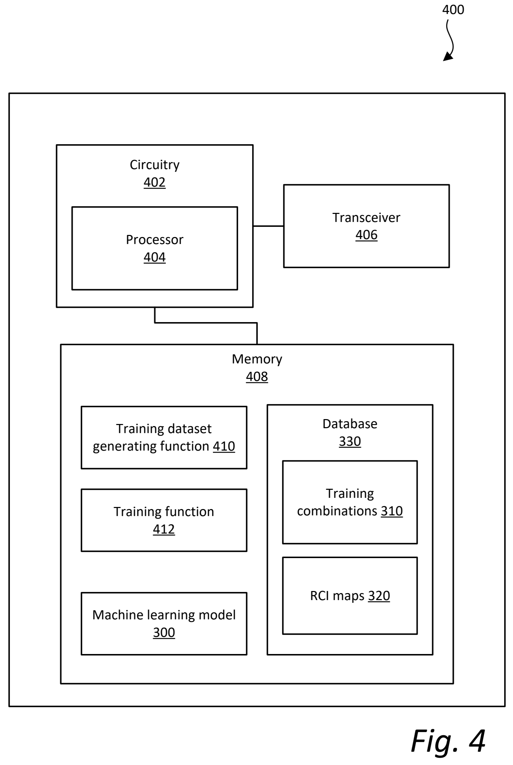

The training of the machine learning model 300 may be performed in a training apparatus 400 configured to train the machine learning model 300 to predict a RCI map for a candidate paperboard patterning design. Such training apparatus 400 will now be discussed in connection with Fig. 4. The training apparatus 400 comprises circuitry 402. The circuitry 402 may physically comprise one single circuitry device. Alternatively, the circuitry 402 may be distributed over several circuitry devices. The training apparatus 400 may further comprise a transceiver 406. The transceiver 406 is configured to enable the training apparatus 400 to communicate with other devices or apparatuses. The transceiver 406 may both transmit data from and receive data to the training apparatus 400. The transceiver 406 may communicate over wired or wireless communication protocols, e.g. Bluetooth, Wi-Fi, cellular communication etc.. The training apparatus 400 further comprise a memory 408. The circuitry 402 being communicatively connected to the transceiver 406 and/or the memory 408. The circuitry 402 may comprise a data bus, and the circuitry 402 may communicate with the transceiver 406 and/or the memory 408 via the data bus. The circuitry 402 is configured to carry out overall control of functions and operations of the training apparatus 400. The circuitry 402 may include a processor 404, such as a central processing unit, CPU, a graphics processing unit, GPU, a microcontroller, or a microprocessor. The processor 404 may be configured to execute program code stored in the memory 408, in order to carry out functions and operations of the training apparatus 400.

The memory 408 may be a non-transitory computer-readable storage medium. The memory 408 may comprise one or more of a buffer, a flash memory, a hard drive, a removable media, a volatile memory, a non-volatile memory, a random access memory RAM, or another suitable device. In a typical arrangement, the memory 408 may include a non-volatile memory for long term data storage and a volatile memory that functions as system memory for the training apparatus 400. The memory 408 may exchange data with the circuitry 402 over the data bus. Accompanying control lines and an address bus between the memory 408 and the circuitry 402 also may be present.

Functions and operations of the training apparatus 400 may be implemented in the form of executable logic routines, e.g., lines of code, software programs, etc., that are stored on a non-transitory computer readable recording medium, e.g., the memory 408, of the training apparatus 400 and are executed by the circuitry 402, e.g. using the processor 404. Put differently, when it is stated that the circuitry 402 is configured to perform a specific operation, or execute a specific function, the processor 404 of the circuitry 402 may be configured execute program code portions stored on the memory 408, wherein the stored program code portions correspond to the specific operation or function. Furthermore, the functions and operations of the circuitry 402 may be a stand-alone software application or form a part of a software application that carries out additional tasks related to the circuitry 402. The described functions and operations may be considered a method that the corresponding apparatus is configured to carry out, such as the method discussed above in connection with Fig. 3. Also, while the described functions and operations may be implemented in software, such functionality may as well be carried out via dedicated hardware or firmware, or some combination of one or more of hardware, firmware, and software. The following operations may be performed by the training apparatus 400, and may be stored as functions on a non-transitory computer readable recording medium.

The circuitry 402 is configured to execute a training dataset generating function 410. The training dataset generating function 410 is configured to, from a 3D model of a paperboard patterning design, generate a 2D matrix of values. The values in the 2D matrix of values are a representation of height/depth of the surface topography of the 3D model of a paperboard patterning design. The 2D matrix of values may also be referred to as a training paperboard patterning design 302. An example of a portion of a 3D model of a paperboard patterning design is illustrated in Fig 2a. A training paperboard patterning design 310, i.e. a 2D matrix of values, for the portion of the 3D model of Fig. 2a is illustrated in Fig. 2c. The training dataset generating function 410 is typically configured to generate a plurality of 2D matrices of values, i.e. a plurality of training paperboard patterning designs 302, for a plurality of 3D models of paperboard patterning designs. This in order to generate sufficient amount of training data. The training dataset generating function 410 is further configured to generate a respective set of paperboard material model parameters for a number of training paperboard materials. Each set of paperboard material model parameters comprises one or more of density, elastic and plastic stresses and strains, yield stress/strength, stress/strain at break, thickness, bending stiffness, tensile energy absorption, and compression strength. The training dataset generating function 410 is further configured to a series of training combinations 310 of training paperboard patterning designs 302 and training paperboard materials 304. The training dataset generating function 410 is further configured to, for each of the training combinations 310, generate a respective training RCI map 320. The respective training RCI map 320 is generated by performing a respective finite element method, FEM, simulation having the respective training combination as input. The training RCI maps 320 may be represented as 2D matrices of values. An example of a training RCI map 320 for the portion of the 3D model of Fig. 2a is illustrated in Fig 2b. Hence, the training dataset generating function 410 is configured to generate a plurality of training combinations 310 and for each such training combination 310 a corresponding training RCI map 320. The training combinations 310 and the corresponding training RCI maps 320 are saved in the memory 408 in the database 330. Hence, the memory 408 is storing the database 330 comprising the training combinations 310 and the corresponding training RCI maps 320.

The circuitry 402 is configured to execute a training function 412. The training function 412 is configured to train the machine learning model 300 to predict a RCI map for a candidate combination 510 of a paperboard patterning design and the paperboard material inputted to the machine learning model 300. The training comprises adjusting weights of the machine learning model 300 using the training combinations 310 of the paperboard patterning designs 302 and paperboard materials 304 of the training dataset as input and the training RCI maps 320 of the training dataset as ground truth.

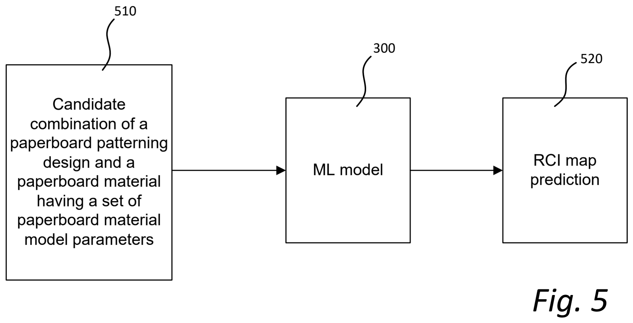

The machine learning model 300 may be saved on the memory 408 of the training apparatus 400. Alternatively, or in combination, to storing the machine learning model 300 in the memory 408 of the training apparatus 400, the machine learning model 300 may be provided in a remote server, such as in the cloud. The machine learning model 300 may alternatively or in combination, be stored in a memory of a relative crack index, RCI, generating apparatus. The RCI generating apparatus is configured to generate a predicted RCI map 520 for a candidate combination 510 of a paperboard patterning design and a paperboard material. Such process is illustrated in connection with Fig. 5. As illustrated in connection with Fig. 5, once the machine learning model 300 has been trained, input data in the form of a candidate combination 510 of a paperboard patterning design and a set of paperboard material model parameters for a paperboard material may be inputted to the machine learning model 300. The output from the machine learning model 300 is a RCI map 520 for the candidate combination 510.

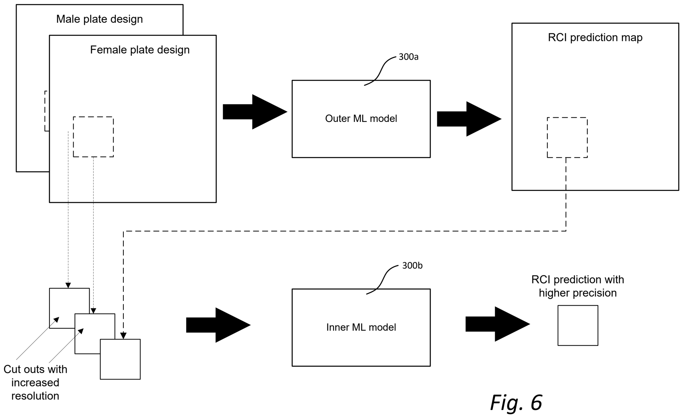

In order to reduce computing resources a resolution limitation on the 2D matrices representing the training paperboard patterning designs 302 and the candidate paperboard patterning design may be needed. For example, 2D matrices of the training paperboard patterning designs 302 having a maximum resolution of 512x800 pixels may be used to train the machine learning model 300. However, such resolution may not be enough to arrive at a RCI map of enough accuracy and resolution. In order to cure this, a dual machine learning model approach may be used. In connection with Fig. 6 such a dual machine learning model approach will be discussed. According to this dual machine learning model approach, a first/outer sub machine learning model 300a having a full geometry of the paperboard patterning designs with a relatively lower resolution as input data and a second/inner sub machine learning model 300b having a portion of the geometry of the paperboard patterning designs with a relatively higher resolution as input data is utilized. Hence, the outer sub machine learning model 300a is configured to have a 2D matrix of a paperboard patterning design having a first resolution as input and the inner sub machine learning model 300b is configured to have a 2D matrix of a portion of the paperboard patterning design with a second resolution as input. The second resolution is higher than the first resolution. The paperboard patterning design having the first resolution is typically sampled from a 3D computer model of the patterning design to have the first resolution. Moreover, the portion of the paperboard patterning design with the second resolution is typically resampled from the 3D computer model of the patterning design to gain the second, relatively higher resolution. The second/inner sub machine learning model 300b may also have a respective portion of the RCI map corresponding to the first/outer sub machine learning model 300a as input, see Fig. 6.

The machine learning model 300 comprising the first/outer sub machine learning model 300a and the second/inner sub machine learning model 300b may be trained according to the following. The training dataset for the first/outer sub machine learning model 300a may be generated to comprise, for each of the plurality of training paperboard patterning designs 302, 2D matrix data of the training paperboard patterning design 302 having the first resolution and a respective training RCI map having the first resolution. The training RCI maps are generated by performing a finite element method simulation having the paperboard patterning design as input. The training dataset for the second/inner sub machine learning model 300b may be generated to comprise, for each of the plurality of training paperboard patterning designs 302, 2D matrix data of one or more portions of the training paperboard patterning design 302 having the second resolution and a respective training RCI map of the one or more portions of the training paperboard patterning design 302 having the second resolution. Again, the training RCI maps are generated by performing a finite element method simulation having the paperboard patterning design as input. Training the first/outer sub machine learning model 300a comprises using the 2D matrix data of the training paperboard patterning designs 302 having the first resolution as input and the respective training RCI map as ground truth. Training the second/inner sub machine learning model 330b comprises using the 2D matrix data of the one or more portions of training paperboard patterning designs 302 having the second resolution as input and the respective one or more RCI maps of the one or more portions of the training paperboard patterning designs 302 as ground truth. In the training of the second/inner sub machine learning model 330b also a cut out of the training RCI map used to train the first/outer sub machine learning model 330a may be used as input data. The cut out corresponding to the portion of the training paperboard patterning designs used to generate the portion of training paperboard patterning designs 302 having the second resolution.

The person skilled in the art realizes that the present invention by no means is limited to what is explicitly described above. On the contrary, many modifications and variations are possible within the scope of the appended claims.

For example, the machine learning model 300 may further be configured to have a web tension of a web of the paperboard packaging material as input. If so, generating the training dataset for the machine learning model 300 may further comprise considering the web tension of the web of the paperboard packaging material in performing the FEM simulation. That is, the web tension of the web of the paperboard packaging material is also used in generating the training RCI maps 320. Further, training the machine learning model 300 then may comprise using the web tension of the web of the paperboard packaging material as input in the training of the machine learning model 300.

Alternatively, or in combination, the machine learning model 300 may further be configured to have a speed of a web of the paperboard packaging material as input. If so, generating the training dataset for the machine learning model 300 may further comprise considering the speed of the web of the paperboard packaging material in performing the FEM simulation. That is, the speed of the web of the paperboard packaging material is also used in generating the training RCI maps 320. Further, training the machine learning model 300 then may comprise using the speed of the web of the paperboard packaging material as input in the training of the machine learning model 300.

Alternatively, or in combination, the machine learning model 300 may further be configured to have one or more conditions at the patterning of paperboard packaging material as input. If so, generating the training dataset for the machine learning model 300 may further comprise considering the one or more conditions in performing the FEM simulation. That is, one or more conditions is also used in generating the training RCI maps 320. Further, training the machine learning model 300 then may comprise using the one or more conditions as input in the training of the machine learning model 300. The one or more conditions is selected from the group of conditions consisting of: temperature, moisture in the paperboard, moister in the air.

Additionally, variations can be understood and effected by the skilled person in practicing the claimed invention, from a study of the drawings, the disclosure, and the appended claims.

## Claims

1. A training method for training a machine learning model (300) to predict a relative crack index, RCI, map (520) for a candidate combination (510) of a paperboard patterning design and a paperboard material having a set of paperboard material model parameters, the candidate combination (510) to be used in patterning of paperboard packaging material, the training method comprising:
generating a training dataset for the machine learning model by, for each training combination (310) of one or more training paperboard patterning designs (302) and one or more paperboard materials (304) having a respective set of paperboard material model parameters, performing a finite element method simulation resulting in a respective training RCI map (320); and
training the machine learning model (300) to predict the RCI map (520) for the candidate combination (510) inputted to the machine learning model (300), the training comprises adjusting weights of the machine learning model (300) using the training combinations (310) of paperboard patterning designs (302) and paperboard materials (304) of the training dataset as input and the training RCI maps (320) of the training dataset as ground truth.

2. The training method according to claim 1, wherein the set of paperboard material model parameters comprises one or more of density, elastic and plastic stresses and strains, yield stress/strength, stress/strain at break, thickness, bending stiffness, tensile energy absorption, and compression strength.

3. The training method according to claim 1 or 2, wherein each paperboard patterning design comprises a surface topography of a tool (100) to be used for applying the patterning to a paperboard (110).

4. The training method according to claim 3, wherein each paperboard patterning design is represented as a 2D matrix of values, and wherein the respective RCI map is represented as a 2D matrix of values.

5. The training method according to claim 4, wherein each paperboard patterning design comprises a surface topography of a male roll (102a) and a surface topography of female roll (102b), respectively, the male and female rolls (102a, 102b) forming a roller nip.

6. The training method according to claim 5, wherein each paperboard patterning design comprises a roller distance between the male and female rolls (102a, 102b) of the roller nip.

7. The training method according to any one of claims 1-6,
wherein the machine learning model is further configured to have one or more of a web tension of a web of the paperboard packaging material and a speed of the web of the paperboard packaging material as input,
wherein generating the training dataset for the machine learning model further comprises considering the web tension and/or the speed of the web of the paperboard packaging material in performing the finite element method simulation,
wherein training the machine learning model further comprises using the web tension and/or the speed of the web of the paperboard packaging material as input in the training of the machine learning model.

8. A computer-implemented method for predicting relative crack index, RCI, for a candidate combination (510) of a paperboard patterning design and a paperboard material having a set of paperboard material model parameters, the candidate combination (510) to be used in paperboard packaging material patterning, the method comprising:
providing a trained machine learning model (300) being trained in accordance with any one of claims 1-6;
inputting data of the candidate combination (510) to the trained machine learning model (300); and
receiving a predicted RCI map (520) as output from the trained machine learning model (300).

9. The method according to claim 8, wherein the provided trained machine learning model (300) has been trained in accordance with claim 7, and wherein the input data to the trained machine learning model (300) further comprises the web tension and/or the speed of the web of the paperboard packaging material.

10. A non-transitory computer-readable storage medium having stored thereon a machine learning model that has been trained in accordance with any one of claims 1-7.

11. A training apparatus (400) for training a machine learning model (300) to predict a relative crack index, RCI, map (520) for a candidate combination (510) of a paperboard patterning design and a paperboard material having a set of paperboard material model parameters, the candidate combination (510) to be used in patterning of paperboard packaging material, the training apparatus (400) comprising circuitry (402) configured to execute:
a training dataset generating function (410) configured to:
from 3D computer models of paperboard patterning designs, generate a respective training paperboard patterning design (302), and
for each training combination (310) of a training paperboard patterning designs (302) and a training paperboard material (304) having a respective set of paperboard material model parameters, generate a respective training RCI map (320), wherein the respective training RCI map (320) is generated by performing a respective finite element method simulation having the 3D computer model of the respective training paperboard patterning design (302) and the set of paperboard material model parameters of the respective training paperboard material (304) as input; and
a training function (412) configured to train the machine learning model (300) to predict the RCI map (520) for the candidate combination (510) of the paperboard patterning design and the paperboard material by adjusting weights of the machine learning model (300) using the training combinations (310) of paperboard patterning designs (302) and paperboard materials (304) as input and the corresponding training RCI maps (320) as ground truth.

12. The training apparatus (400) according to claim 11, wherein the training paperboard patterning design (302) is represented as a 2D matrix of values representing height/depth of a surface topography of the 3D computer model of the paperboard patterning design.

13. The training apparatus (400) according to claim 11 or 12, wherein the set of paperboard material model parameters comprises one or more of density, elastic and plastic stresses and strains, yield stress/strength, stress/strain at break, thickness, bending stiffness, tensile energy absorption, and compression strength.

14. The training apparatus (400) according to any one of claims 11-13, wherein the training RCI maps (320) are represented as 2D matrices of values.
